# EUROPÄISCHE PATENTANMELDUNG

(11) **EP 2 979 530 A1**
(43) Veröffentlichungstag der Anmeldung: **03.02.2016**
(21) Anmeldenummer: 15177345.4
(22) Anmeldetag: 17.07.2015
(51) Int. Cl.: A01D 34/30, A01D 41/14, F16D 1/09

(54) **EXZENTERTRIEB**

(30) Priorität: 01.08.2014 DE 102014215163
(71) Anmelder: Deere & Company, Moline, IL 61265-8098 (US)
(72) Erfinder: Gil, Monica, 28980 Parla (Madrid) (ES)
(74) Vertreter: Reichert, Christian

(57) **Zusammenfassung**

Ein Exzentertrieb (10) zum Antrieb von Schneidwerken an Mähvorsätzen für Mähdrescher umfasst ein Getriebegehäuse (16), eine darin gelagerte erste Welle (20), eine in der ersten Welle exzentrisch gelagerte zweite Welle (106), und eine dritte Welle (26), deren Rotationsachse (38) mit der Rotationsachse (18) der ersten Welle (20) einen Winkel einschließt, wobei die dritte Welle einen Schwungkörper (152) aufnimmt. Um die Haltbarkeit der Schwungkörperverbindung zu verbessern, wird vorgeschlagen, dass der Schwungkörper über eine auf der Außenfläche (158) konisch zulaufende Buchse (154), die auf der dritten Welle drehfest und axial fixierbar angeordnet ist, mit der dritten Welle verbindbar ist, wobei der Schwungkörper eine korrespondierend zur Außenfläche der Buchse konisch zulaufende Nabe (160) aufweist, mit welcher der Schwungkörper mittels einer auf der dritten Welle angeordneten Wellenmutter (138) auf die Außenfläche der Buchse pressbar ist.

## Beschreibung

Die Erfindung betrifft einen Exzentertrieb, mit einem Getriebegehäuse, einem von dem Getriebegehäuse umschlossenen Getrieberaum, einer in dem Getriebegehäuse gelagerten ersten Welle, einem in der ersten Welle mit seinem Querschnittsschwerpunkt exzentrisch zur Rotationsachse ausgebildeten Hohlraum, einer in dem Hohlraum der ersten Welle drehbar gelagerten zweiten Welle, die wenigstens einen Verzahnungsbereich und einen axial aus dem Hohlraum der ersten Welle herausragenden Wellenendbereich aufweist, und einer im Getriebegehäuse gelagerten dritten Welle, deren Rotationsachse mit einer auf der Rotationsachse der ersten Welle liegenden Ebene einen Winkel einschließt, wobei die dritte Welle einen Schwungkörper aufnimmt.

Im Stand der Technik sind Exzentertriebe bekannt, die zueinander winklig angeordnete Getriebeübersetzungen mit ineinander angeordneten Getriebewellen aufweisen. Exzentertriebe mit ineinander angeordneten Getriebewellen stellen unter anderem eine kompakte Bauweise und eine Möglichkeit zur Realisierung von Exzentertrieben dar. Exzentertriebe werden beispielsweise in der Landwirtschaft zum Antrieb von Schneidwerken an Mähvorsätzen für Mähdrescher eingesetzt. Derartige Exzentertriebe können an ihrer Antriebswelle zusätzlich einen Schwungkörper aufweisen, der auf der Welle gelagert und drehfest an dieser befestigt ist. Es ist üblich diesen Schwungkörper über eine herkömmliche Passfeder/Nut-Verbindung drehfest auf der Antriebswelle zu sichern und axial über eine Wellenmutter gegen einen Wellenabsatz auf der Antriebswelle zu spannen.

Bei zu geringem Spannmoment oder während hochbeanspruchter Betriebszustände kann sich die Wellenmutter an der Welle lösen, so dass der Verlust des Schwungkörpers droht, womit irreparable Schäden am Exzentergetriebe und an seiner Umgebung und damit auch hohe Reparaturkosten und Wartungsaufwand entstehen können. Um dem entgegenzuwirken wurde versucht, die Wellenmutter und Antriebswelle zwecks größerem aufzubringendem Spannmoment größer auszubilden, was jedoch mit Material- und Werkzeugkosten sowie erhöhtem Montageaufwand verbunden ist. Eine weitere Lösung bestand darin, den Schwungkörper und die Welle durch einen Querbolzen miteinander zu verriegeln, wodurch ebenfalls der Herstellungs- und Montageaufwand unrentabel wurden.

Die der Erfindung zugrunde liegende Aufgabe wird darin gesehen, ein Exzentergetriebe der eingangs genannten Art anzugeben, durch welche eines oder mehrere der vorgenannten Probleme überwunden werden.

Die Aufgabe wird erfindungsgemäß durch die Lehre des Patentanspruchs 1 gelöst. Vorteilhafte Ausgestaltungen und Weiterbildungen der Erfindung gehen aus den Unteransprüchen hervor.

Erfindungsgemäß wird ein Exzentertrieb der oben genannten Art derart ausgebildet, dass der Schwungkörper, über eine auf der dritten Welle drehfest und axial fixierbar angeordnete und auf der Außenfläche konisch zulaufende Buchse, mit der dritten Welle verbindbar ist, wobei der Schwungkörper eine korrespondierend zur Außenfläche der Buchse konisch zulaufende Nabe aufweist, mit welcher der Schwungkörper mittels einer auf der dritten Welle angeordneten Wellenmutter auf die Außenfläche der Buchse pressbar ist. Durch diese Anordnung, insbesondere durch die konische Ausbildung der Buchse und des Schwungkörpers wird eine sehr viel größere Fläche für ein aufzubringendes Spannmoment geschaffen, wodurch mit gleichem oder gar geringerem Drehmoment an der Wellenmutter höhere Reibkräfte am Zusammenschluss von Schwungkörper und Buchse wirken können. Der Einsatz einer konischen Buchse ermöglicht es auch, bereits vorhandene Schwungkörper durch geringe Änderungen anzupassen, so dass die nach herkömmlicher Methode zusammengebauten Exzentertriebe mit geringem Aufwand angepasst bzw. umgebaut werden können.

Auf der Außenfläche der Buchse ist eine Aussparung zur Aufnahme eines Rotationsmitnehmers und an der Innenseite der Nabe eine geräumte Nut ausgebildet. Diese Maßnahme stellt sich als montagefreundlich und wenig aufwändig dar und bietet daher auch die oben genannten Vorteile.

Die Aussparung kann beispielsweise als Scheibenfedernut und der Rotationsmitnehmer als Scheibenfeder ausgebildet sein, wobei die Scheibenfeder als halbkreisflächige Scheibenhälfte ausgebildet sein kann. Diese Art der Ausgestaltung zeichnet sich insbesondere durch eine einfache und kostengünstige Variante in Herstellung und Montageaufwand aus.

In gleicher Weise ist es jedoch auch möglich die Aussparung als Passfedernut und der Rotationsmitnehmer als Passfeder ausgebildet sind. Dadurch mag sich zwar der Herstellungsaufwand erhöhen, jedoch die Verschleißfestigkeit ebenso.

Auf der Welle ist ebenfalls eine Ausnehmung zur Aufnahme eines Rotationsmitnehmers und an der Innenseite der Buchse eine geräumte Nut ausgebildet. Ferner ist die Aussparung auf der Welle vorteilhafter Weise als Passfedernut und der Rotationsmitnehmer als Passfeder ausgebildet. Die oben genannten Vorteile ergeben sich dadurch gleichermaßen.

Anhand der Zeichnung, die ein Ausführungsbeispiel der Erfindung zeigt, werden nachfolgend die Erfindung sowie Vorteile und vorteilhafte Weiterbildungen und Ausgestaltungen der Erfindung näher beschrieben und erläutert.

Es zeigt:
- Fig. 1: eine erste teilweise Querschnittsansicht eines Exzentertriebs mit Schwungkörper an einer Welle des Exzentertriebes,
- Fig. 2: eine zweite teilweise Querschnittsansicht des Exzentertriebs aus Figur 1 mit Schwungkörper und detailvergrößerte Einzelheit der Verbindungsanordnung für den Schwungkörper an die Welle des Exzentertriebes,
- Fig. 3: eine dritte teilweise Querschnittsansicht des Exzentertriebs aus den Figuren 1 und 2 mit Schwungkörper und detailvergrößerter Einzelheit der Verbindungsanordnung für den Schwungkörper an die Welle des Exzentertriebes,
- Fig. 4: eine perspektivische Seitenansicht einer Buchse aus der Verbindungsanordnung gemäß den Figuren 2 und 3.

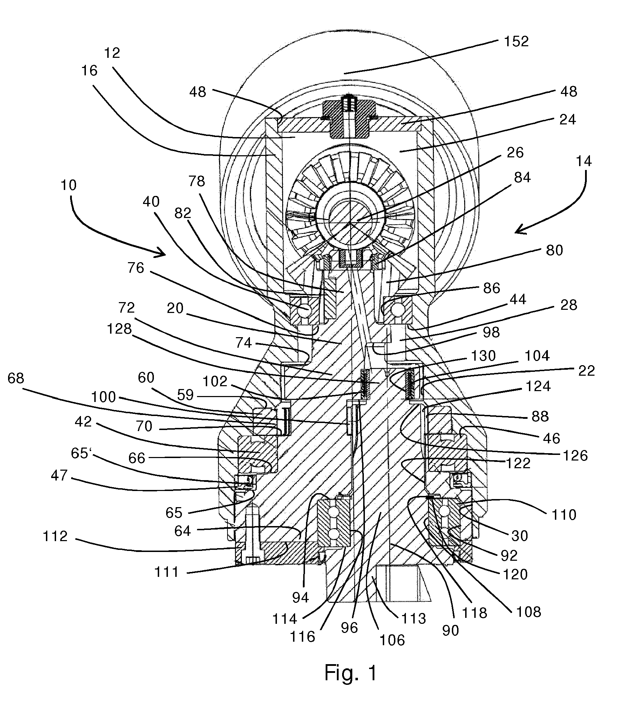

Die Figuren 1 bis 3 zeigen einen Exzentertrieb 10 mit einem einen Getrieberaum 12 eines Winkelgetriebes 14 umgebenden Getriebegehäuse 16. Das Getriebegehäuse 16 erstreckt sich im Wesentlichen entlang der Rotationsachse 18 einer ersten Welle 20, wobei die Rotationsachse 18 eine Längsrichtung des Exzentertriebes 10 definiert. Der Getrieberaum 12 unterteilt sich in einen ersten Getrieberaumbereich 22, der im Wesentlichen die erste Welle 20 umgibt und in einen zweiten Getrieberaumbereich 24, der im Wesentlichen eine dritte, in einem Winkel (nahezu in einem rechten Winkel) zur Längsrichtung angeordnete Welle 26 umgibt. Die Getrieberaumbereiche 22, 24 sind in Längsrichtung aneinandergrenzend ausgebildet und weisen einen gemeinsamen zylindrischen Übergangsbereich 28 auf, der in etwa mittig zur Längsausdehnung des Getriebegehäuses 16 und koaxial zur Rotationsachse 18 angeordnet ist und durch welchen eine Verbindung der Getrieberaumbereiche 22, 24 definiert wird.

Das Getriebegehäuse 16 weist im ersten Getrieberaumbereich 22 eine erste zylindrische Öffnung 30 auf, die koaxial zur Rotationsachse 18 ausgerichtet ist und den ersten Getrieberaumbereich 22 axial nach außen öffnet. Ferner weist das Getriebegehäuse 16 im zweiten Getrieberaumbereich 24 eine zweite, dritte und vierte zylindrische Öffnung 32, 34, 36 auf. Die zweite Öffnung 32 ist koaxial zur Rotationsachse 18 ausgerichtet und öffnet den zweiten Getrieberaumbereich 24 axial nach außen. Die dritte und vierte Öffnung 34, 36 sind beidseitig der Rotationsachse 18 und koaxial zu einer in einem Winkel (nahezu in einem rechten Winkel) zur Rotationsachse 18 angeordneten Rotationsachse 38 der dritten Welle 26 angeordnet.

In dem gemeinsamen Übergangsbereich 28 ist ein erstes Lager 40 und in der ersten Öffnung 30 im ersten Getrieberaumbereich 22 ein zweites Lager 42 für die erste Welle 20 angeordnet. An dem gemeinsamen Übergangsbereich 28 ist ein Absatz 44 eingeformt, der das Lager 40 in Richtung der ersten Öffnung 30 axial fixiert. An der ersten Öffnung 30 ist ein Absatz 46 eingeformt, der das Lager 42 in Richtung des gemeinsamen Übergangsbereichs 28 axial fixiert. Die Lager 40, 42 sind vorzugsweise als Wälzlager ausgebildet und in Figur 1 beispielhaft als Kugellager dargestellt. Durch die Lager 40, 42 wird die erste Welle aufgenommen und drehbar im Getriebegehäuse 16 bzw. im ersten Getrieberaumbereich 22 gelagert. Ferner ist an der ersten Öffnung 30, angrenzend zum zweiten Lager 42, nach außen hin ein erster Wellendichtring 47, beispielsweise ein Simmerring, angeordnet, der den Bewegungsspalt zwischen der ersten Öffnung 30 und der ersten Welle 20 abdichtet.

Im zweiten Getrieberaumbereich 24 ist an der zweiten Öffnung 32 ein Gehäusedeckel 48 vorgesehen, der den zweiten Getrieberaum 24 zur Umgebung hin axial begrenzt.

Im zweiten Getrieberaumbereich 24 ist in der dritten Öffnung 34 ein erstes Lager 49 und in der vierten Öffnung 36 ein zweites Lager 50 für die dritte Welle 26 angeordnet. An der dritten Öffnung 34 ist ein Absatz 52 eingeformt, der das Lager 49 in Richtung der vierten Öffnung 36 axial fixiert. Ferner ist an der dritten Öffnung 34 eine mit einem Sprengring 54 versehene Ringnut 56 eingeformt, wodurch das Lager 49 auch in die entgegengesetzte Richtung axial fixiert wird. Das Lager 50 ist frei gelagert in der vierten Öffnung 36 angeordnet. Die Lager 49, 50 sind vorzugsweise als Wälzlager ausgebildet. Durch die Lager 49, 50 wird die dritte Welle 26 aufgenommen und drehbar im Getriebegehäuse 16 bzw. im zweiten Getrieberaumbereich 24 gelagert. Ferner ist an der vierten Öffnung 36, ein zweiter Wellendichtring 57, beispielsweise ein Simmerring, angeordnet, der den Bewegungsspalt zwischen der vierten Öffnung 36 und der dritten Welle 26 abdichtet. Ein an der dritten Öffnung 34 vorgesehener Lagerdeckel 58 dichtet die dritte Öffnung 34 nach außen hin ab.

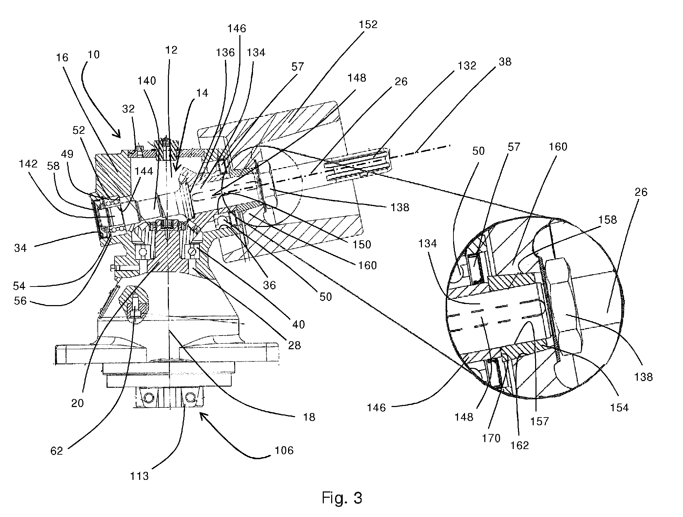

Des Weiteren ist im ersten Getrieberaumbereich 22 zwischen den Lagern 40, 42 ein weiterer Absatz 59 vorgesehen, an dem ein Hohlrad 60 befestigt ist. Das Hohlrad 60 wird mittels auf dem Umfang des Absatzes 59 verteilte Schrauben 62 (siehe Figur 3) mit dem Getriebegehäuse 16 verschraubt.

Die erste Welle 20 erstreckt sich durch den gesamten ersten Getrieberaumbereich 22 und weist einen aus der ersten Öffnung 30 herausragenden Wellenendbereich 64 auf, der im Wesentlichen den gesamten Durchmesser der ersten Öffnung 30 abdeckt. Ausgehend von dem Wellenendbereich 64 ist ein erster Wellenabsatz 65 ausgebildet, dem sich ein Wellendichtringbereich 65' für den ersten Wellendichtring 47 anschließt. Ausgehend von dem Wellenendbereich 64 ist ein zweiter Wellenabsatz 66 ausgebildet, dem sich ein Lagerbereich 68 für das zweite Lager 42 anschließt. An den Lagerbereich 68 angrenzend ist ein dritter Wellenabsatz 70 ausgebildet, dem sich ein mittlerer Wellenbereich 72 anschließt. Der mittlere Wellenbereich 72 mündet in einen vierten Wellenabsatz 74. Dem vierten Wellenabsatz 74 folgt ein fünfter Wellenabsatz 76, an den sich ein Wellenzapfen 78 anschließt, wobei sich der Wellenzapfen 78 durch den gemeinsamen Übergangsbereich 28 in den zweiten Getrieberaumbereich 24 erstreckt. Auf dem Wellenzapfen 78 ist ein erstes Kegelrad 80 gelagert, welches über eine Feder-Nut-Verbindung 82 drehfest mit der ersten Welle 20 bzw. mit dem Wellenzapfen 78 verbunden ist. Der Wellenzapfen 78 ist mit einer Wellenmutter 84 versehen. Auf dem ersten Kegelrad 80 ist ein Lagerbereich 86 ausgebildet, durch den die erste Welle 20 im ersten Lager 40 aufgenommen wird.

Die erste Welle 20 ist mit einem Hohlraum 88 versehen. Der Hohlraum 88 ist im Wesentlichen zylindrisch um eine Rotationsachse 90 ausgebildet, wobei die Rotationsachse 90 parallel zur Rotationsachse 18 und exzentrisch zur ersten Welle 20 angeordnet ist. Der Hohlraum 88 weist eine zylindrische Öffnung 92 auf, die den Hohlraum 88 zum Wellenende 64 der ersten Welle 20 hin axial zur Rotationsachse 90 öffnet. Ausgehend von der Öffnung 92 weist der Hohlraum 88 einen ersten und einen zweiten Absatz 94, 96 auf und mündet in einen Hohlraumboden 98. Zwischen dem ersten und dem zweiten Absatz 94, 96 ist der Hohlraum 88 auf Höhe des Hohlrades 60 mit einer Öffnung 100 versehen, die sich radial und axial zur Rotationsachse 90 entlang der Hohlraumwand erstreckt und einen Teilbereich der Hohlraumwand zum Hohlrad 60 hin öffnet.

Zwischen dem zweiten Absatz 96 des Hohlraums 88 und dem Hohlraumboden 98 ist ein erster Lagersitz 102 zur Aufnahme eines ersten Lagers 104 für eine zweite Welle 106 ausgebildet. Zwischen der Öffnung 92 des Hohlraums 88 und dem ersten Absatz 94 ist ein zweiter Lagersitz 108 zur Aufnahme eines zweiten Lagers 110 für die zweite Welle 106 ausgebildet. Das zweite Lager 110 ist mittels einer auf die Stirnfläche 111 des Wellenendbereichs 64 geschraubte Platte 112 axial gesichert, indem der äußere Lagerring des zweiten Lagers 110 gegen den ersten Absatz 94 gedrückt wird.

Das erste und zweite Lager 104, 110 für die zweite Welle 106 sind als Wälzlager ausgebildet, wobei für das erste Lager 104 ein Rollenlager in Form eines Nadellagers und für das zweite Lager 110 ein Kugellager vorgesehen ist, wie in Figur 1 dargestellt ist.

Die zweite Welle 106 erstreckt sich durch den gesamten Hohlraum 88 der ersten Welle 20 und weist einen aus der ersten Öffnung 92 der ersten Welle 20 herausragenden Wellenendbereich 113. Ausgehend von dem Wellenendbereich 113 ist die zweite Welle 106 mit einem ersten Wellenabsatz 114 versehen, dem sich ein Lagerbereich 116 für das zweite Lager 110 anschließt. An den Lagerbereich 116 angrenzend ist eine Ringnut 118 ausgebildet, die einen Sprengring 120 (in Figur 1 dargestellt) aufnimmt. Der Ringnut 118 schließt sich ein zweiter Wellenabsatz 122 an, der in einen Verzahnungsbereich 124 der zweiten Welle 106 mündet. Der Verzahnungsbereich 124 der zweiten Welle 106 erstreckt sich axial zwischen den Absätzen 94, 96 des Hohlraums 88 und endet in einem dritten Wellenabsatz 126. Dem dritten Wellenabsatz 126 schließt sich ein Wellenzapfen 128 an, auf dem ein Lagerbereich 130 für das erste Lager 104 ausgebildet ist.

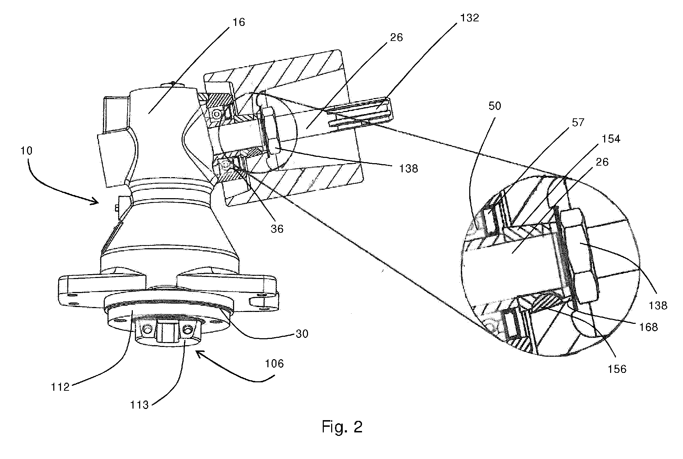

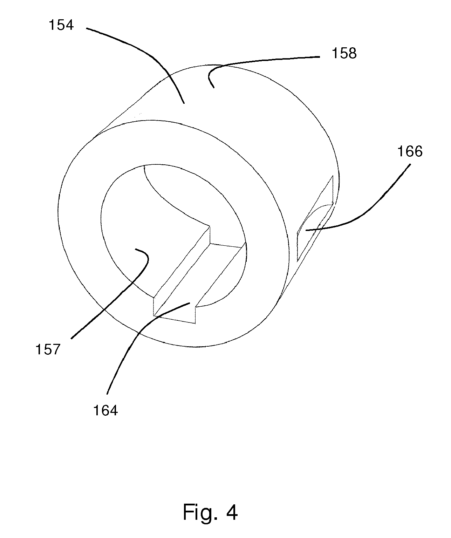

Die dritte Welle 26 erstreckt sich durch den gesamten zweiten Getrieberaumbereich 24 und weist einen aus der vierten Öffnung 36 herausragenden verzahnten Wellenendbereich 132 auf (siehe Figuren 2 und 3). Ausgehend vom Wellenendbereich 132 weist die dritte Welle 26 einen Wellenbereich 134 auf, dem sich ein Absatz 136 anschließt, wobei ein Teil des Wellenbereichs 134 aus der vierten Öffnung 36 herausragt, auf dem eine Wellenmutter 138 angeordnet. Zwischen dem Absatz 136 und der dritten Öffnung 34 erstreckt sich ein Wellenbereich 140, dem sich ein Wellenzapfen 142 anschließt. Auf dem Wellenzapfen 142 ist ein Lagerbereich 144 ausgebildet, der von dem ersten Lager 49 des zweiten Getrieberaumbereichs 24 aufgenommen wird. Dem Lagerbereich 144 schließt sich ein Gewinde mit Wellenmutter 145, zur axialen Sicherung der dritten Welle 26 an. Auf dem Wellenbereich 134 ist ein zweites Kegelrad 146 befestigt, welches über einen Rotationsmitnehmer 148 in Form einer Passfeder einer Feder-Nut-Verbindung drehfest mit der dritten Welle 26 verbunden ist. Auf dem zweiten Kegelrad 146 ist ein Lagerbereich 150 ausgebildet, durch den die dritte Welle 26 im zweiten Lager 50 aufgenommen wird. Ferner ist auf dem aus der vierten Öffnung 36 herausragenden Teil des Wellenbereichs 134 ein Schwungkörper 152 angeordnet, der auf einer Buchse 154 gelagert und über die Wellenmutter 138 axial auf dieser fixiert ist. Über einen zwischen Buchse 154 und Schwungkörper 152 angeordneten weiteren Rotationsmitnehmer 156 in Form einer Scheibenfeder einer Scheibenfeder-Scheibennut-Verbindung ist der Schwungkörper 152 drehfest auf der dritten Welle 26 gesichert. Wie in den Figuren 2, 3 und 4 dargestellt ist, weist die Buchse 154 eine zylindrisch ausgeprägte Innenfläche 157 und eine in Richtung des Wellenendbereichs 132 konisch zulaufende Außenfläche 158 auf. Der Schwungkörper 152 weist eine Nabe 160 mit einer zur Außenfläche 158 der Buchse 154 korrespondierenden konischen Innenfläche 162 auf. Ferner ist auf der Innenfläche 157 der Buchse 154 eine Federnut 164 ausgebildet, die mit dem als Feder ausgebildeten Rotationsmitnehmer 148 in Eingriff tritt. Ferner ist auf der Außenfläche 158 der Buchse 154 eine Aussparung 166 in Form einer Scheibenfedernut ausgebildet, die mit dem als Scheibenfeder ausgebildeten Rotationsmitnehmer 156 in Eingriff tritt, wobei in der Nabe 160 eine mit dem Rotationsmitnehmer 156 in Eingriff tretende Nut 168 ausgeformt ist, so dass über den Rotationsmitnehmer 156 eine drehfeste Verbindung zwischen Buchse 154 und Nabe 160 hergestellt ist.

Im Folgenden wird kurz auf den Zusammenbau sowie auf die relevanten Vorteile des dargestellten Exzentertriebs 10 eingegangen.

Ausgehend von dem Getriebegehäuse 16 wird dieses mit dem Hohlrad 60 bestückt und mit dem zweiten Lager 42 für die erste Welle 20 sowie mit dem ersten Wellendichtring 47 versehen. Es folgt das Einsetzen der ersten Welle 20 in den ersten Getrieberaumbereich 22 durch die erste Öffnung 30. Über die zweite Öffnung 32 des zweiten Getrieberaumbereichs 24 wird das mit dem zweiten Lager 40 vormontierte erste Kegelrad 80 über den Wellenzapfen 78 geführt. Durch die Wellenmutter 84 und den Wellenabsatz 76 werden das Kegelrad 80 und das Lager 40 axial verspannt und die erste Welle 20 axial gesichert.

Die zweite Welle 106 wird mit dem ersten Lager 104 und mit dem zweiten Lager 110 vormontiert, wobei das zweite Lager 110 mit dem Sprengring 120 in der Ringnut 118 axial gesichert wird. Die vormontierte zweite Welle 106 wird in den Hohlraum 88 der ersten Welle 20 geführt und über die Platte 112 axial fixiert.

Die dritte Welle 26 wird dahingehend vormontiert, dass der Wellenbereich 134 mit dem zweiten Kegelrad 146 und dem zweiten Lager 50 vormontiert wird. Die Öffnung 34 wird mit dem ersten Lager 49 bestückt. Die dritte Welle 26 kann dann durch die zweite Öffnung 36, samt Kegelrad 146 und zweitem Lager 50, mit dem Wellenzapfen 144 voraus in den zweiten Getrieberaumbereich 24 geführt und in das erste Lager 49 geschoben und über die Wellenmutter 145 an dem bereits in der ersten Öffnung 34 fixierten ersten Lager 49 axial gesichert werden.

Nach dem Einsetzen der dritten Welle 26 folgt das Abdichten der Welle über den Wellendichtring 57, der zwischen zweitem Kegelrad 146 und zweiter Öffnung 36 eingepasst wird. Es folgt die Montage des Schwungkörpers 152. Zunächst wird die Buchse 154, mit der Federnut 164 fluchtend zum Rotationsmitnehmer 148 (Passfeder) ausgerichtet, auf den Wellenbereich 134 geschoben. Anschließend wird der Rotationsmitnehmer 156 (Scheibenfeder) in die als Scheibenfedernut ausgebildete Aussparung 166 gesetzt, bevor der Schwungkörper 152 mit seiner Nabe 160 und der darin ausgeformten Nut 168 fluchtend zum Rotationsmitnehmer 148 (Scheibenfeder) auf die Außenfläche 158 der Buchse 154 geschoben wird. Die konisch ausgebildete Außenfläche 158 der Buchse, sowie die konisch ausgebildete Innenfläche 162 der Nabe 160 werden sodann auf einander geschoben bzw. gepresst bzw. miteinander verspannt, indem die Wellenmutter 138 auf den Wellenbereich 134 geschraubt wird. Der Schwungkörper 152 wird so zusammen mit der Buchse 154 zwischen einem einen Absatz 170 bildenden Ende des zweiten Kegelrades 146 und der Wellenmutter 138 axial eingespannt.

Über die konischen Ausbildungen der Nabe 162 und der Buchse 154 wird mit relativ geringer axialer Spannkraft zwischen zweitem Kegelrad 146 und Wellenmutter 138 sowohl eine hohe axiale Verspannung als auch eine Fixierung des Schwungkörpers in Umfangsrichtung der zweiten Welle 26 mit hohem Reibschluss in Umfangsrichtung zwischen Buchse 154 und Schwungkörper 152 erzielt. Durch den erhöhten Reibschluss zwischen Buchse 154 und Schwungkörper 152 sowie der hohen axialen Verspannung beider Teile wird präventiv ein sich Lösen des Schwungkörpers auch bei höchsten Beanspruchungen im Betrieb vermieden. Der hohe Reibschluss zwischen Buchse 154 und Schwungkörper 152, der durch die konische Anordnung geschaffen wird, ermöglicht es, dass als Rotationsmitnehmer 156 eine Scheibenfeder mit einer Scheibenfeder-Scheibenfedernut-Verbindung ausreicht, welche gegenüber einer konventionellen Feder-Nut-Verbindung einen wesentlich geringeren Fertigungsaufwand erfordert. Dennoch kann hier alternativ auch eine Feder-Federnut-Verbindung zum Einsatz kommen.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Exzentergetriebe (10) zum Antrieb von Schneidwerken an Mähvorsätzen für Mähdrescher, mit einem Getriebegehäuse (16), einem von dem Getriebegehäuse (16) umschlossenen Getrieberaum (12), einer in dem Getriebegehäuse (16) gelagerten ersten Welle (20), einem in der ersten Welle (20) mit seinem Querschnittsschwerpunkt exzentrisch zur Rotationsachse (18) ausgebildeten Hohlraum (88), in dem eine zweite Welle (106) drehbar gelagert ist, die einen mit dem Getriebegehäuse (16) im Eingriff stehenden Verzahnungsbereich (124) und einen axial aus dem Hohlraum (88) der ersten Welle (20) herausragenden Wellenendbereich (113) aufweist, und einer im Getriebegehäuse (16) gelagerten dritten Welle (26), deren Rotationsachse (38) mit einer auf der Rotationsachse (18) der ersten Welle (20) liegenden Ebene einen Winkel einschließt, wobei die dritte Welle (26) einen Schwungkörper (152) aufnimmt, **dadurch gekennzeichnet, dass** der Schwungkörper (152) über eine auf der Außenfläche (158) konisch zulaufende Buchse (154), die auf der dritten Welle (26) drehfest und axial fixierbar angeordnet ist, mit der dritten Welle (26) verbindbar ist, wobei der Schwungkörper (152) eine korrespondierend zur Außenfläche (158) der Buchse (154) konisch zulaufende Nabe (160) aufweist, mit welcher der Schwungkörper (152) mittels einer auf der dritten Welle (26) angeordneten Wellenmutter (138) auf die Außenfläche (158) der Buchse (154) pressbar ist.

2. Exzentergetriebe (10) nach Anspruch 1, **dadurch gekennzeichnet, dass** auf der Außenfläche (158) der Buchse (154) eine Aussparung (166) zur Aufnahme eines Rotationsmitnehmers (156) und an der Innenseite (162) der Nabe (160) eine geräumte Nut (168) ausgebildet ist.

3. Exzentergetriebe (10) nach Anspruch 2, **dadurch gekennzeichnet, dass** die Aussparung (166) auf der Buchse (154) als Scheibenfedernut und der Rotationsmitnehmer (156) als Scheibenfeder ausgebildet sind.

4. Exzentergetriebe (10) nach Anspruch 2, **dadurch gekennzeichnet, dass** die Aussparung (166) auf der Buchse (154) als Passfedernut und der Rotationsmitnehmer (156) als Passfeder ausgebildet sind.

5. Exzentergetriebe (10) nach einem der Ansprüche 1 bis 4, **dadurch gekennzeichnet, dass** auf der dritten Welle (26) eine Ausnehmung zur Aufnahme eines Rotationsmitnehmers (148) und an der Innenseite (157) der Buchse (154) eine geräumte Nut (164) ausgebildet ist.

6. Exzentergetriebe (10) nach Anspruch 5, **dadurch gekennzeichnet, dass** die Aussparung auf der dritten Welle (26) als Passfedernut und der Rotationsmitnehmer (148) als Passfeder ausgebildet sind.
